# EUROPEAN PATENT APPLICATION

(11) **EP 4 104 717 A1**
(43) Date of publication of application: **21.12.2022**
(21) Application number: 21180426.5
(22) Date of filing: 18.06.2021
(51) Int. Cl.: A47J 31/36

(54) **EXTRACTION UNIT FOR COFFEE MACHINES**

(71) Applicant: Fortune Design International Co., Ltd., Wanchai (HK)
(72) Inventor: Zhu, Chengyu, Zhejiang, 310013 (CN)
(74) Representative: Manzella & Associati

(57) **Abstract**

The extraction assembly for coffee machines comprises a frame (1) to which a hydraulic cylinder (2), a piston (3) and an actuation assembly (30) are associated, said actuation assembly (30) comprising a slide (4). Said piston (3) has a first end associated with said hydraulic cylinder (2) and an opposite second end connected to said actuation assembly (30). Said slide (4) is mounted slidable with respect to said frame (1) so that, in use, a movement of the slide (4) may guide said hydraulic cylinder (2) to move by said piston (3).

## Description

### Technical field

The present invention relates to an extraction assembly for coffee machines.

### Prior art

A conventional espresso coffee machine, used for example in restaurants or at home, includes an assembly for producing hot water and an assembly for extracting coffee.

The assembly for producing hot water is equipped with a pump for generating pressurized hot water. Hot water is injected into an extraction chamber to extract the beverage from the coffee, which is supplied in granular form, usually roasted coffee powder. The extraction chamber is formed by a portafilter, equipped with a body usually in metal or chromed material suitable for accommodating the filter. The filter contains a certain amount of coffee powder. The dose of coffee powder may be encapsulated between two layers of filter paper or filter cloth connected to each other, or it may be inserted into a rigid capsule or of any other type suitable for the preparation of hot drinks. The base of the portafilter has an opening in a substantially central position for enabling the extracted beverage to come out. A nozzle with one or more spigots for dispensing the extracted drink into one or two cups is placed at the opening; usually, the portafilter structure comprises a hydraulic cylinder, a piston and an actuation assembly.

This solution is not faultless. In particular, it is complained that the extraction assembly has poor stability and the piston must be guided upwards or downwards by the pin of the actuation assembly, which takes up a lot of space and is inconvenient to use.

### Disclosure

The object of the present invention is to solve the aforementioned problems, devising an extraction assembly for coffee machines capable of overcoming the problems of poor stability and excessive bulk of the extraction assembly according to the known art.

A further object of the invention is to provide an extraction assembly for coffee machines with a simple constructive and functional concept, with reliable operation, versatile use, and relatively unexpensive cost.

The aforementioned purposes are achieved, according to the present invention, by the extraction assembly for coffee machines according to claim 1.

The extraction assembly for coffee machines comprises a frame, a hydraulic cylinder, a piston and an actuation assembly associated with the frame.

One end of the piston is connected to the hydraulic cylinder, and the piston may operate the hydraulic cylinder which moves longitudinally. The other end of the piston is connected to an actuation assembly which includes a slide, mounted sliding on the frame.

According to an aspect of the invention, the actuation assembly also includes a first drive rod, a second drive rod and a third drive rod.

One end of the first drive rod, one end of the second drive rod and one end of the third drive rod are hinged on the same hinge shaft.

The opposite end of the first drive rod is hinged to the slide, the opposite end of the second drive rod is hinged to the frame, and the opposite end of the third drive rod is hinged to the piston.

Two opposite walls of the frame are provided symmetrically with respective positioning holes.

The second drive rod is hinged on the positioning holes. The second drive rod is equipped with stopping elements and one side of each positioning hole is equipped with an arc guide groove, through which a respective stopping element may move, and with a matching portion, which prevents the movement of a respective stopping element.

In particular, the matching portion is configured in such a way as to prevent the respective stopping element from rotating beyond a certain predefined angle.

In use, when the slide moves forward, the first drive rod pushes the hinge shaft to rise. In this way, the second drive rod rotates, the stopping elements rotate in their respective arc guide grooves, the third drive rod pushes the piston in motion, then the piston drives the hydraulic cylinder in motion.

The piston is movable longitudinally with respect to the frame.

Advantageously, the slide is capable of sliding longitudinally with respect to the frame between a first position, corresponding to a minimum stroke configuration of the piston, and a second position, corresponding to a maximum stroke configuration of the piston.

Preferably, when the slide is in said second position, corresponding to a maximum stroke configuration of the piston, the second drive rod and the third drive rod are parallel to each other.

Preferably, when the slide is in said second position, corresponding to a maximum stroke configuration of the piston, the second drive rod and the third drive rod are parallel to the sliding direction of the piston.

This advantageously allows the piston to be locked in the maximum stroke position.

Preferably, the second drive rod comprises a main arm and a secondary arm, perpendicular to the main arm.

Preferably, the secondary arm is connected to the main arm at a central portion of the secondary arm.

Preferably, the secondary arm has, at its end portions, respective connecting pins, for engaging the positioning holes.

In addition, the lower part of the frame has a pair of guide rods. The slide has at least one wheel on each side. The wheels can roll along the guide rods. The wheels have respective throats associated with the guide rods. The throats associated with the guide rods enable the slide to slide along the frame, using the wheels.

The lower part of the frame is also equipped with support means, suitable for defining the position of the guide rods to prevent their detachment.

The front end of the hydraulic cylinder is equipped with a capsule thrust plate.

One side of the capsule thrust plate is equipped with a first water inlet, and one side of the piston is equipped with a second water inlet communicating with the hydraulic cylinder.

The first water inlet and the second water inlet are used respectively for the passage of hot water and cold water.

A base of the slide is symmetrically provided with respective drive pins for driving in motion the slide, the piston and the thrust plate of the capsule.

First sliders and second sliders are provided symmetrically on both sides of the capsule thrust plate and of the piston, respectively. Respective grooves are symmetrically arranged on both sides of the frame, and the first sliders and second sliders are placed in the grooves.

Preferably, each side of the frame bears a groove suitable for accommodating the first and second sliders side by side. The first and second sliders may slide in the groove.

Advantageously, the invention refers to an extraction assembly for coffee machines, wherein the hydraulic cylinder and the piston are assembled separately. The piston is driven in motion by an actuation assembly, for driving the hydraulic cylinder in turn. The structure is more stable and easier to disassemble and replace. The slide of the driving assembly may be moved longitudinally along the frame and the slide guides the piston to move longitudinally through the drive rods. Compared to the previously known structure, which requires the drive pins to be moved vertically for operating the piston, the overall dimensions are reduced and the use is less tiring.

### Description of drawings

The details of the invention will become more evident from the detailed description of a preferred embodiment of the extraction assembly for coffee machines illustrated as an example in the accompanying drawings, wherein:
Figure 1 is a perspective view of an extraction assembly for coffee machines according to the preferred embodiment of the present invention;
Figure 2 is a sectional view of the extraction assembly shown in Figure 1;
Figure 3 is a perspective view of the internal structure of the extraction assembly shown in Figure 1;
Figure 4 is a perspective view of the actuation assembly of the extraction assembly shown in Figure 1;
Figure 5 is a perspective view of the frame of the extraction assembly shown in Figure 1;
Figure 6 is a perspective view of the lower surface of the frame of the extraction assembly shown in Figure 1.

### Embodiments of the invention

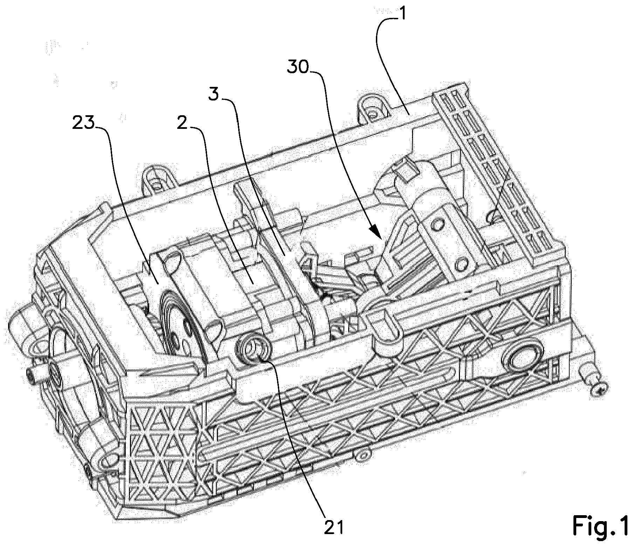

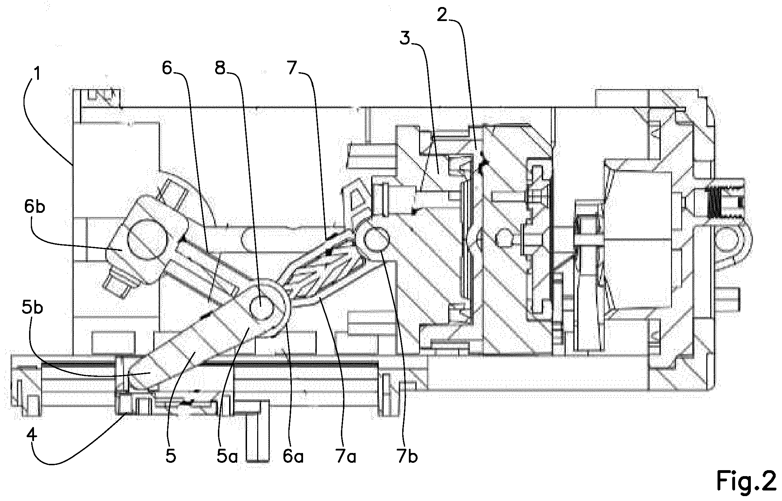

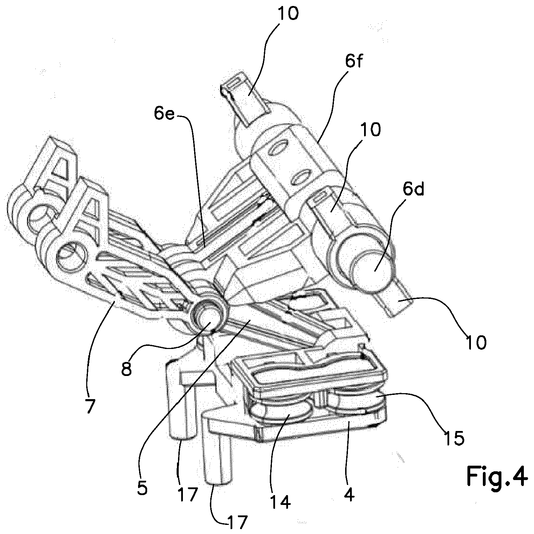

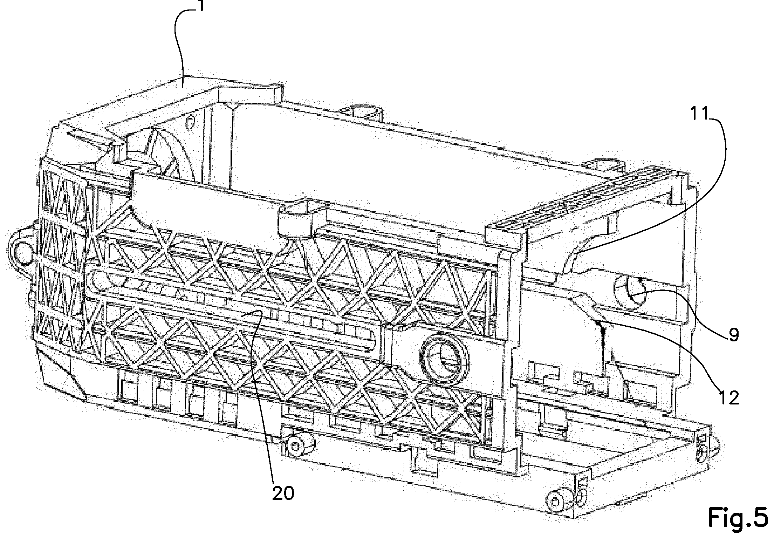

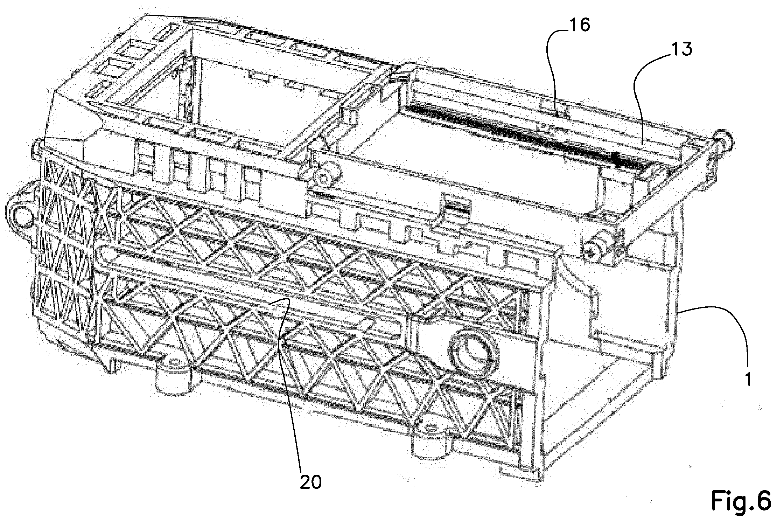

With reference to Figures 1 - 6, in order to solve the above mentioned technical problems, the present invention provides an extraction assembly for coffee machines, which comprises a frame 1, a hydraulic cylinder 2, a piston 3 and a actuation assembly 30 installed in the frame 1, wherein the piston 3 is connected at one end with the hydraulic cylinder 2, and at the other end it is connected with the actuation assembly 30.

When the actuation assembly 30 is in operation, it drives the piston 3 in motion, which in turn guides the hydraulic cylinder 2 to move longitudinally to the frame 1.

The slide 4 of the actuation assembly is slidably mounted longitudinally to the frame 1.

In this embodiment, the actuation assembly includes a first drive rod 5, a second drive rod 6 and a third drive rod 7.

An end 5a of the first drive rod 5, an end 6a of the second drive rod 6 and an end 7a of the third drive rod 7 are hinged on a same hinge shaft 8.

The opposite end 5b of the first drive rod 5 is hinged on the slide 4, the opposite end 6b of the second drive rod 6 is hinged on the frame 1 and the opposite end 7b of the third drive rod 7 is hinged on the piston 3.

Positioning holes 9 are symmetrically provided on respective opposite walls of the frame 1.

The second drive rod 6 is hinged in the positioning holes 9, by means of respective connecting pins 6c, 6d. The pins 6c, 6d are symmetrically equipped with respective stopping elements 10.

In particular, the second transmission rod 6 includes a main arm 6e, which contains the end 6a hinged to the hinge shaft 8. The second drive rod 6 also comprises a secondary arm 6f, which is orthogonal to the main arm 6e. The secondary arm 6f is connected to the main arm 6e at a central portion of the secondary arm 6f. The secondary arm 6f bears the connecting pins 6c, 6d at the end portions.

On the side of each hole 9, the frame 1 forms an arched guide groove 11 allowing the movement of a respective stopping element 10, and also forms a matching portion 12, for preventing the movement of a respective stopping element 10 beyond a predetermined angle of rotation.

The operation of the extraction assembly can be easily understood from the above description.

In use, when the slide 4 slides forward, the first drive rod 5 pushes the hinge shaft 8 to rise, the second drive rod 6 is rotated and the stopping element 10 rotates along the arc guide groove 11. At the same time, the third drive rod 7 pushes the piston 3 to move forward, thus driving the hydraulic cylinder 2 to move. The hinge shaft 8 moves upward. When the second drive rod 6 is parallel to the third drive rod 7, the piston 3 reaches the maximum stroke. When the slide 4 slides backwards, the hinge shaft 8 goes down, the second drive rod 6 rotates, and the stopping element 10 moves. The stopping element 10 rotates in the arc guide groove 11. The third drive rod 7 drives the piston 3 and the hydraulic cylinder 2 which move backwards, and the stopping element 10 comes into contact with the matching portion 12 after having rotated by a certain angle. The second transmission rod 6 cannot continue to rotate and the slide 4 reaches the minimum stroke position.

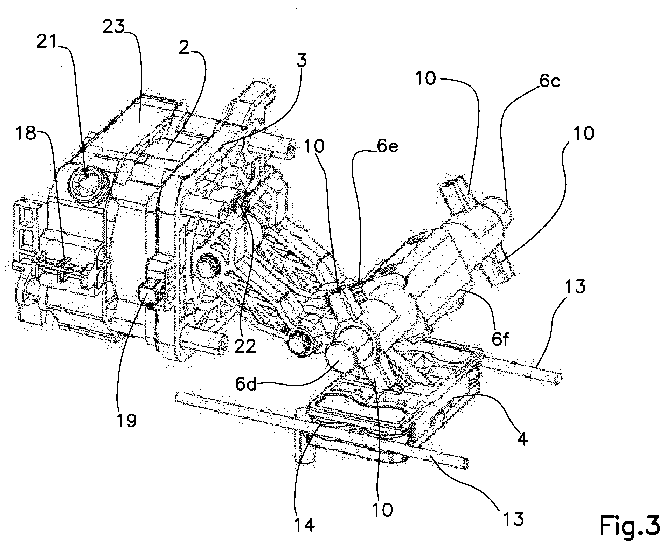

Referring to Figures 3, 4 and 6, two sliding guide rods 13 are installed symmetrically in a lower base of the frame 1. Relative support means 16 are also symmetrically provided in the lower part of the frame 1. The support means 16 define the position of the rod 13 to prevent the detachment thereof. At least one wheel 14 is installed on each side of the slide 4. The wheels 14 can roll along each rod 13. Each wheel 14 is equipped with a throat 15 capable of being associated with a rod 13, so that the wheels 14 roll on the rod 13 at the throat 15 to reduce the resistance of the slide 4 during the movement.

In this embodiment, the front end of the hydraulic cylinder 2 is provided with a thrust plate of the capsule 23. One side of the thrust plate of the capsule 23 is equipped with a first water inlet 21, and one side of the piston 3 is equipped with a second water inlet 22 communicating with the hydraulic cylinder 2.

In use, through the first water inlet 21 hot water is introduced directly into the coffee capsule, and through the second water inlet 22 cold water is introduced into cylinder 2.

A base of the slide 4 is symmetrically provided with respective actuation pins 17 for driving the slide 4 in motion.

The thrust plate of the capsule 23 is equipped, respectively on both sides thereof, with first sliders 18. The piston 3 is equipped, respectively on both sides thereof, with second sliders 19. The frame 1 is symmetrically equipped on both sides with sliding grooves 20. The first sliders 18 and the second sliders 19 are held sliding in the respective sliding grooves 20. The first sliders 18 and the second sliders 19 reduce the sliding resistance of the hydraulic cylinder 2 and piston 3.

Advantageously, the hydraulic cylinder and piston are assembled separately. After that the piston is operated by the drive assembly, the hydraulic cylinder is operated. The structure is more stable and it is easy to disassemble and replace. The slide of the actuation assembly may slide longitudinally along the frame and the slide may guide the piston by moving longitudinally, by means of the drive rods. Compared to the previously known structure, which requires the vertical traction of the actuation pin to operate the piston, the overall dimensions are reduced and the actuation is less tiring.

The extraction assembly described by way of example is subject to many changes according to the different requirements.

In the practical embodiment of the invention, the materials used, as well as the shape and the dimensions, may be modified depending on requirements.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. An extraction assembly for coffee machines, comprising:
a frame (1);
a hydraulic cylinder (2), a piston (3) and an actuation assembly (30) associated with said frame (1), said actuation assembly (30) comprising a slide (4);
**characterized in that** said piston (3) has a first end associated with said hydraulic cylinder (2) and an opposite second end connected to said actuation assembly (30) and
**in that** said slide (4) is mounted in a sliding manner with respect to said frame (1) so that, in use, a movement of the slide (4) may drive the hydraulic cylinder (2) in motion by means of the piston (3).

2. Extraction assembly according to claim 1, **characterized in that** the actuation assembly (30) comprises a first drive rod (5), a second drive rod (6) and a third drive rod (7), an end (5a) of the first drive rod (5), one end (6a) of the second drive rod (6) and one end (7a) of the third drive rod (7) being hinged on the same hinge shaft (8); the opposite end (5b) of the first drive rod (5) being hinged on the slide (4), the opposite end (6b) of the second drive rod (6) being hinged on the frame (1) and the opposite end (7b) of the third drive rod (7) being hinged on the piston (3).

3. Extraction assembly according to claim 2, **characterized in that** positioning holes (9) are symmetrically provided on respective opposite walls of the frame (1) wherein the second drive rod (6) is hinged; the second drive rod (6) being provided, at the positioning holes (9), with respective stopping elements (10); said walls of the frame (1) being provided with respective guide grooves (11) and with respective matching portions (12) for said stopping elements (10).

4. Extraction assembly according to any one of the preceding claims, **characterized in that** a base (100) of the frame (1) is symmetrically provided with sliding guide rods (13), and two sides of the slide (4) are symmetrically provided with at least one wheel (14), said at least one wheel (14) being capable of rolling along a respective sliding rod (13).

5. Extraction assembly according to claim 4, **characterized in that** said at least one wheel (14) is provided with a throat (15) associable with a respective sliding rod (13).

6. Extraction assembly according to claim 4 or 5, **characterized in that** the base (100) of the housing (1) is symmetrically provided with support means (16), for respective sliding guide rods (13).

7. Extraction assembly according to one of the preceding claims, **characterized in that** a base of the slide (4) is symmetrically provided with actuation pins (17).

8. Extraction assembly according to any one of the preceding claims, **characterized in that** the front end of the hydraulic cylinder (2) is provided with a thrust plate of the capsule (23), one side of the thrust plate of the capsule (23) being provided with a first water inlet (21), one side of the piston (3) being provided with a second water inlet (22) communicating with the hydraulic cylinder (2).

9. Extraction assembly according to claim 8, **characterized in that** the thrust plate of the capsule (23) and the piston (2) are symmetrically equipped respectively with a first slider (18) and with a second slider (19), the frame (1) being equipped, on said opposite walls, with sliding grooves (20), in which said first sliders (18) and said second sliders (19) may slide.

10. Extraction assembly according to one of the preceding claims, **characterized in that** the slide (4) may slide longitudinally with respect to the frame (1) between a first position, corresponding to a minimum stroke configuration of the piston (3) and a second position, corresponding to a maximum stroke configuration of the piston (3), said piston (3) being longitudinally movable with respect to the frame (1).

11. Extraction assembly according to claim 10, **characterized in that** when the slide (4) is in said second position, corresponding to a maximum stroke configuration of the piston (3), the second drive rod (6) and the third drive rod (7) are parallel to each other.

12. Extraction assembly according to claim 11, **characterized in that** when the slide (4) is in said second position, corresponding to a maximum stroke configuration of the piston (3), the second drive rod (6) and the third drive rod (7) are parallel to the sliding direction of the piston (1).
